(19) Europäisches Patentamt
European Patent Office
Office européen des brevets

(11) **EP 3 881 984 B1**

(12) **EUROPEAN PATENT SPECIFICATION**

(45) Date of publication and mention
of the grant of the patent:
**13.03.2024  Bulletin 2024/11**

(21) Application number: **19884495.3**

(22) Date of filing: **08.11.2019**

(51) International Patent Classification (IPC):
**B25J 11/00** (2006.01)      **A61F 2/60** (2006.01)
**A61F 2/70** (2006.01)

(52) Cooperative Patent Classification (CPC):
**B25J 9/0006; B25J 13/06**

(86) International application number:
**PCT/JP2019/043858**

(87) International publication number:
**WO 2020/100737 (22.05.2020 Gazette 2020/21)**

(54) **LOAD REDUCTION ASSISTANCE DEVICE, LOAD REDUCTION ASSISTANCE SYSTEM, LOAD REDUCTION ASSISTANCE METHOD, PROGRAM, AND STORAGE MEDIUM FOR STORING PROGRAM**

LASTREDUZIERUNGUNTERSTÜTZUNGSVORRICHTUNG, LASTREDUZIERUNGUNTERSTÜTZUNGSSYSTEM, LASTREDUZIERUNGUNTERSTÜTZUNGSVERFAHREN, PROGRAMM UND SPEICHERMEDIUM ZUM SPEICHERN DES PROGRAMMS

DISPOSITIF D'AIDE À LA RÉDUCTION DE CHARGE, SYSTÈME D'AIDE À LA RÉDUCTION DE CHARGE, PROCÉDÉ D'AIDE À LA RÉDUCTION DE CHARGE, PROGRAMME ET SUPPORT DE STOCKAGE POUR STOCKER UN PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2018   JP 2018212804**

(43) Date of publication of application:
**22.09.2021   Bulletin 2021/38**

(73) Proprietor: **NEC Corporation**
**108-8001 Tokyo (JP)**

(72) Inventor: **OOKOBA, Tadashi**
**108-8001 Tokyo (JP)**

(74) Representative: **Vossius & Partner**
**Patentanwälte Rechtsanwälte mbB**
**Siebertstraße 3**
**81675 München (DE)**

(56) References cited:
EP-A2- 3 173 191          WO-A1-2017/105547
WO-A1-2017/191762      JP-A- 2012 205 621
JP-A- 2017 086 524        JP-A- 2018 023 676
JP-A- 2018 047 547

**Description**

TECHNICAL FIELD

The present invention relates to a load reduction assistance device, a load reduction assistance system, a load reduction assistance method and a program.

BACKGROUND ART

There is known a load reduction device that performs assistance of a load such as a walking motion of a user when worn by the user and mitigates the load of luggage carried by the user. When wearable by a person, the load reduction device is sometimes called a powered suit.

Some powered suits assist walking movement by driving a link mechanism provided on the user's legs by outputting torque from actuators to assist muscle strength. Patent Document 1 discloses a wearable action supporting apparatus that, on the basis of a myoelectric potential (biometric signal) by a wearer, alters torque generated on an actuator to control the assisting force to reflect an intention of the wearer. Patent Document 2, upon which the preamble of the independent claims 1, 12 and 13 is based, describes a method of controlling a motion support device for supporting a user's motion, comprising: obtaining state information indicating a location of the user; and obtaining parameters based on the state information for use in controlling the motion support device; and controlling the motion support device based on said parameters. > Patent Document 3 describes a method for estimating posture of a robotic walking aid. Patent Document 4 describes a method of controlling a mobility device including at least one drive component that drives at least one joint component.

CITATION LIST

Patent Literature

[Patent Document 1] Japanese Unexamined Patent Application Publication No. 2005-230099
[Patent Document 2] Japanese Unexamined Patent Application Publication No. 2018-47547
[Patent Document 3] EP 3 173 191 A2
[Patent Document 4] WO 2017/105547 A1

SUMMARY OF THE INVENTION

Problems to be solved by the Invention

However, depending on the state of the passage where the user is walking and the surrounding environment such as the weather, there is a possibility that it is not possible to provide appropriate load reduction control according to the assumed operation of the user.

Therefore, an example object of the present invention is to provide a load reduction assistance device, a load reduction assistance system, a load reduction assistance method and a program that can solve the above-mentioned problems.

Means for Solving the Problems

The invention is specified by the independent claims. Preferred embodiments are defined in the dependent claims.

Advantageous Effects of Invention

According to the present invention, it is possible to provide more suitable load reduction control according to the user's situation.

BRIEF DESCRIPTION OF THE DRAWINGS

FIG. 1 is a diagram showing a configuration of a load reduction assistance system according to the first embodiment of the present invention.

FIG. 2 is a diagram showing a configuration of a powered suit according to the first embodiment of the present invention.

FIG. 3 is a diagram showing a hardware configuration of a control device according to the first embodiment of the present invention.

FIG. 4 is a function block diagram of the control device according to the first embodiment of the present invention.

FIG. 5 is a diagram showing a hardware configuration of the load reduction assistance device according to the first embodiment of the present invention.

FIG. 6 is a function block diagram of the load reduction assistance device according to the first embodiment of the present invention.

FIG. 7 is a diagram showing a processing flow of a load reduction assistance system according to the first embodiment of the present invention.

FIG. 8 is a diagram showing a processing flow of a load reduction assistance system according to a second embodiment of the present invention.

FIG. 9 is an image diagram showing an example of an operation mode selection screen according to the second embodiment of the present invention.

FIG. 10 is a diagram showing another example of the control device of the present invention.

FIG. 11 is a diagram showing a minimum configuration of the load reduction assistance device of the present invention.

FIG. 12 is a diagram showing a configuration of a load reduction assistance system having a plurality of user situation acquisition sensors and a powered suit.

EXAMPLE EMBODIMENT

Hereinbelow, a load reduction assistance device, a load reduction assistance system, a load reduction assistance method, a program, and a storage medium for storing the program according to an embodiment of the present invention will be described with reference to the drawings.

(First Embodiment)

First, the first embodiment will be described.

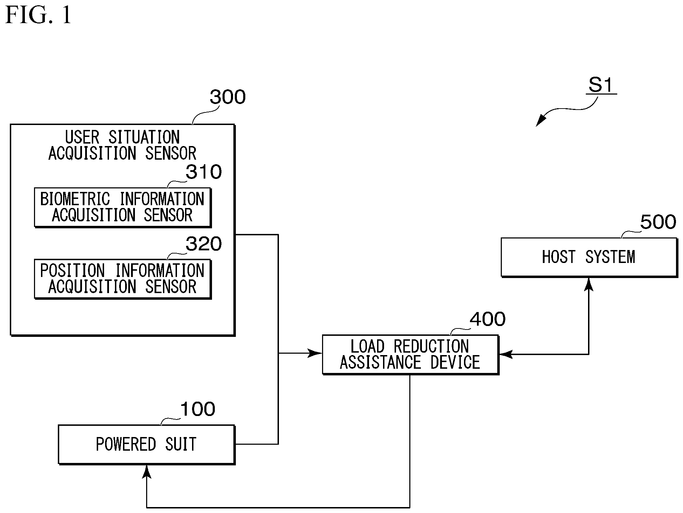

FIG. 1 is a diagram showing a configuration of a load reduction assistance system according to the first embodiment of the present invention.

As shown in this diagram, a load reduction assistance system S1 in the present embodiment is provided with, for example, a powered suit 100, a user situation acquisition sensor 300, a load reduction assistance device 400, and a host system 500.

The powered suit 100 is an aspect of a load reduction device that reduces the load on the user.

The user situation acquisition sensor 300 is provided with a biometric information acquisition sensor 310 and a position information acquisition sensor 320 as an example, and acquires user situation information indicating the situation of the user. The biometric information acquisition sensor 310 is, for example, a thermometer or a heart rate monitor, and acquires biometric information such as a user's body temperature and heart rate. The position information acquisition sensor 320 is, for example, a GPS (Global Positioning System), and acquires the user's position information. The user situation acquisition sensor 300 is pre-attached to, for example, clothing of the user. Thereby, since the user can wear the user situation acquisition sensor 300 simply by putting on clothes, handling is extremely easy.

The load reduction assistance device 400 is a computer that assists the operation of the powered suit 100.

The host system 500 is a server device such as a command system that controls the load reduction assistance system S 1 in a centralized manner. The host system 500 is composed of one or a plurality of computers.

The load reduction assistance device 400, and the user situation acquisition sensor 300 and the powered suit 100 communicate wirelessly. The load reduction assistance device 400 and the host system 500 communicate with each other by wire or wirelessly via a wide area communication network such as the Internet.

In the example of FIG. 1, the load reduction assistance system illustrates one combination of the user situation acquisition sensor 300 and the powered suit 100. However, the present invention is not limited to this example. The load reduction assistance system may have a plurality of combinations of the user situation acquisition sensor 300 and the powered suit 100. In this case, the load reduction assistance device 400 communicates with each of the plurality of combinations.

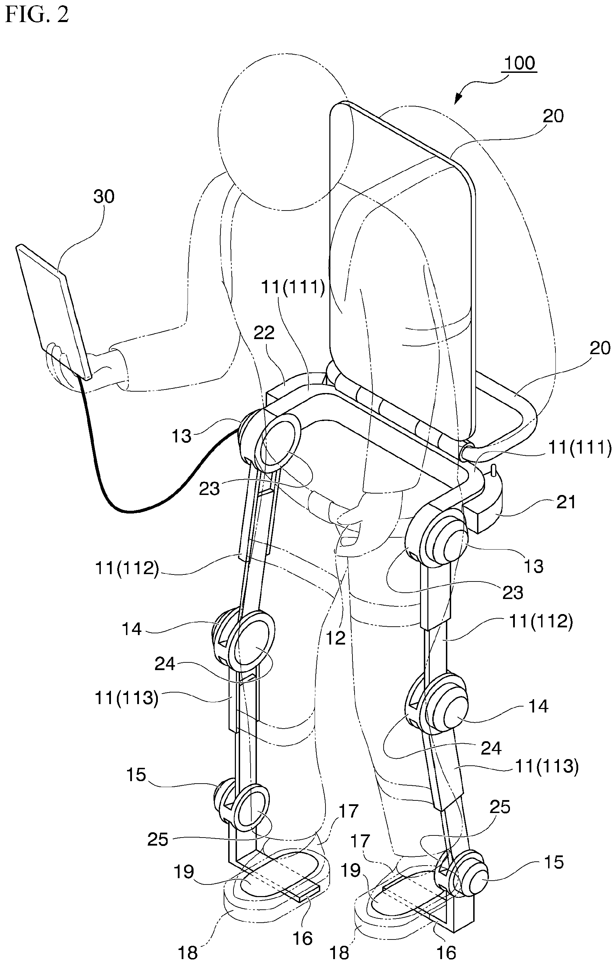

FIG. 2 is a diagram showing a configuration of the powered suit according to the present embodiment.

The powered suit 100 is one aspect of a load reduction device. The powered suit 100 is constituted by a skeleton portion 11, a belt 12, a hip actuator 13, a knee actuator 14, an ankle actuator 15, a shoe sole plate 16, a foot harness 17, a shoe sole load sensor 18, a foot sole load sensor 19, a loading platform 20, a control device 21, a battery 22, a hip joint sensor 23, a knee joint sensor 24, an ankle joint sensor 25, a display unit 30, and the like. As an example, the skeleton portion 11 is roughly classified into a first skeleton portion 111, a second skeleton portion 112, and a third skeleton portion 113.

As illustrated, the powered suit 100 is constituted as follows so as to support the loading platform 20, which is one aspect of the mechanism for holding luggage as an example. That is, the powered suit 100 is provided with the first skeleton portion 111, and the left and right hip actuators 13 are coupled rotatable to the first skeleton portion 111 and the second skeleton portion 112, which corresponds to the left or right thigh portion of the user wearing the powered suit 100, respectively. The left and right knee actuators 14 couple rotatable the corresponding second skeleton portion 112 on the left or right side and the corresponding third skeleton portion 113 along the left or right lower leg portion of the user wearing the powered suit 100. The ankle actuators 15 couple rotatable to the corresponding third skeleton portion 113 on the left or right side, and a corresponding shoe sole plate 16 provided on the back of the foot harness 17 on the left or right side of the user wearing the powered suit 100.

The hip actuator 13, the knee actuator 14, and the ankle actuator 15 are drive mechanisms that output torque for rotationally driving a link (frame) connected at each joint of each leg of the user to reduce the load on the user. The first skeleton portion 111 and the second skeleton portion 112 are links to which the hip actuator 13 is connected. The second skeleton portion 112 and the third skeleton portion 113 are links to which the knee actuator 14 is connected. The third skeleton portion 113 and the shoe sole plate 16 are links to which the ankle actuator 15 is connected. Each link and drive mechanism constitute a link mechanism.

The hip joint sensor 23 is installed in the hip actuator 13, and detects the hip joint angle, that is, the angle formed between the first skeleton portion 111 and the second skeleton portion 112, by an encoder. The knee joint sensor 24 is installed in the knee actuator 14, and detects the knee joint angle, that is, the angle between the second skeleton portion 112 and the third skeleton portion 113, by the encoder. The ankle joint sensor 25 is installed in the ankle actuator 15, and detects the ankle joint angle, that is, the angle between the third skeleton portion 113 and the shoe sole plate 16, by the encoder. The hip joint sensor 23, the knee joint sensor 24, and the ankle joint sensor 25 detect the angle of each joint of each leg of the user (hereinafter referred to as the "joint angle").

The shoe sole load sensor 18 is provided on the bottom of the foot harness 17 corresponding to the shoe worn by the user. The shoe sole load sensor 18 is provided on the ground contact surface side of the shoe sole plate 16 that transmits the weight of the powered suit 100 and luggage to the ground contact surface, and the foot harness 17 that transmits the user's weight to the ground contact surface so as to cover the entire back surface of the shoe sole plate 16 and the foot harness 17. The foot sole load sensor 19 is provided in the foot harness 17 so as to cover the entire underside of the foot so as to be able to measure the weight applied from the sole of the user.

As an example, electrodes are arranged in a matrix on the front and back of a thin sheet-like insulator in the shoe sole load sensor 18 and the foot sole load sensor 19. The shoe sole load sensor 18 and the foot sole load sensor 19 measure the electrical resistance of the lattice points of the electrodes, and output the measured values to the control device 21. The control device 21 calculates the pressure applied to each lattice point and the load on the entire surface of the sensor sheet on the basis of the electrical resistance value of each lattice point.

The display unit 30 is a display device such as an organic EL (Electro-Luminescence) display or a liquid crystal display. The display unit 30 is connected to the control device 21. A touch panel is arranged on the display surface of the display unit 30, and the display unit 30 receives inputs from the user.

The user who wears the powered suit 100 inserts his/her left and right feet into the corresponding foot harnesses 17, and fixes the first skeleton portion 111 to the waist with the belt 12 so that the first skeleton portion 111 is closely attached to the waist. The powered suit 100 has a structure in which most of the load of the luggage and the load of the powered suit 100 is released to the ground surface in contact with the soles of the feet via the skeleton portion 11 and the hip actuator 13, the knee actuator 14, and the ankle actuator 15. The user turns on the control device 21 of the powered suit 100. The control device 21 controls the hip actuator 13, the knee actuator 14, and the ankle actuator 15 so as to transmit as much of the device weight as possible, which is the sum of the load of the luggage loaded on the loading platform 20 and the weight of the powered suit 100, to the walking surface via the skeleton portion 11 and the hip actuator 13, the knee actuator 14, and the ankle actuator 15. Thereby, the powered suit 100 mitigates the burden such as the load of the luggage on the user who wears the powered suit 100 and performs various motions.

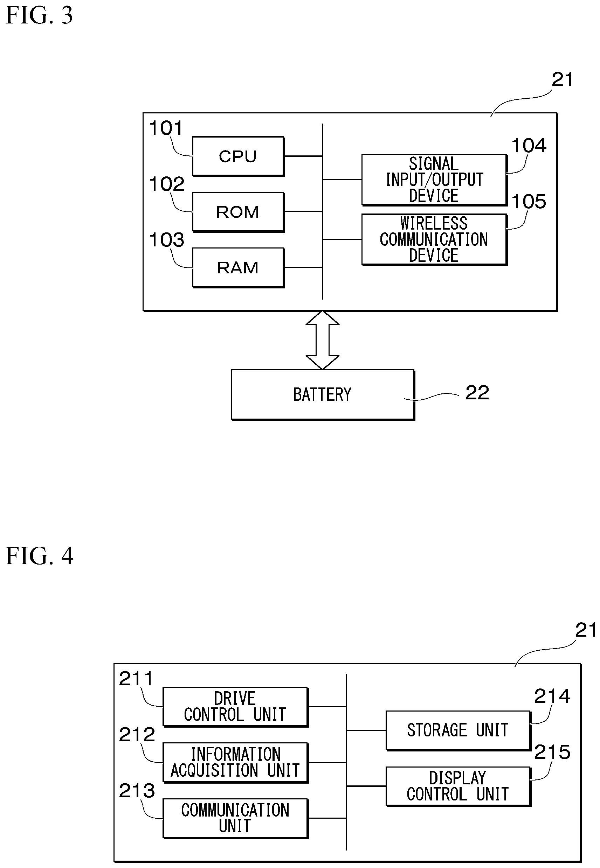

FIG. 3 is a diagram showing the hardware configuration of the control device according to the present embodiment.

As shown in this figure, the control device 21 is a computer provided with hardware such as a CPU (Central Processing Unit) 101, a ROM (Read Only Memory) 102, a RAM (Random Access Memory) 103, a signal input/output device 104, and a wireless communication device 105.

The signal input/output device 104 inputs signals output from the shoe sole load sensor 18, the foot sole load sensor 19, the hip joint sensor 23, the knee joint sensor 24, and the ankle joint sensor 25. The signal input/output device 104 outputs control signals for controlling the hip actuator 13, the knee actuator 14, and the ankle actuator 15. The control device 21 operates by power supplied from the battery 22.

The wireless communication device 105 is communicatively connected with the load reduction assistance device 400.

FIG. 4 is a function block diagram of the control device.

The control device 21 is activated based on the power supplied from the battery 22 when the power button is turned on. The control device 21 executes the control program after startup. As a result, the control device 21 is provided with at least the function configuration of a drive control unit 211, an information acquisition unit 212, a communication unit 213, a storage unit 214 and a display control unit 215.

The drive control unit 211 controls the hip actuator 13, the knee actuator 14, and the ankle actuator 15. The drive control unit 211 drives the hip actuator 13, the knee actuator 14, and the ankle actuator 15 in a user-suited operation mode notified from the load reduction assistance device 400, to reduce the load applied to the user. The operation modes include "running", "walking", "stopping", and the like according to the type of action of the user. The control model corresponding to each operation mode is set in the control device 21 in advance. The drive control unit 211 calculates the torque output by the hip actuator 13, the knee actuator 14, and the ankle actuator 15 using the control model corresponding to each operation mode. Then, the drive control unit 211 outputs the calculated torque to the hip actuator 13, the knee actuator 14, and the ankle actuator 15.

The information acquisition unit 212 acquires sensing information from the shoe sole load sensor 18, the foot sole load sensor 19, the hip joint sensor 23, the knee joint sensor 24, and the ankle joint sensor 25. The sensing information of the shoe sole load sensor 18 and the foot sole load sensor 19 is load information indicating an electrical resistance value corresponding to the pressure (load) of the lattice points of each sensor. The sensing information of the hip joint sensor 23, the knee joint sensor 24, and the ankle joint sensor 25 is joint angle information indicating the detected joint angle.

The communication unit 213 wirelessly communicates with the load reduction assistance device 400.

The storage unit 214 stores various pieces of information such as an angle reference at each joint of the leg.

The display control unit 215 controls the display of the display unit 30. For example, the display control unit 215 displays on the display unit 30 reference information notified from the load reduction assistance device 400 together with the operation mode.

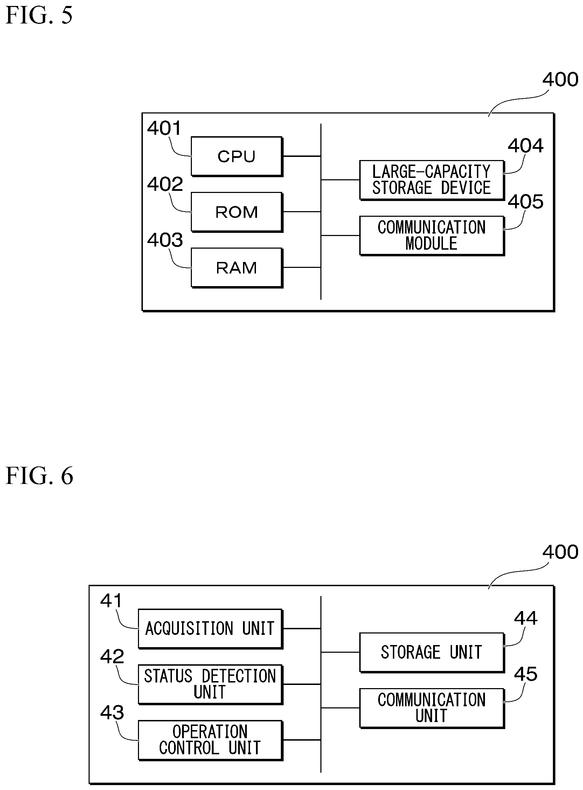

FIG. 5 is a diagram showing the hardware configuration of the load reduction assistance device according to the present embodiment.

As shown in this figure, the load reduction assistance device 400 is a computer equipped with hardware such as a CPU 401, a ROM 402, a RAM 403, a large-capacity storage device 404, and a communication module 405.

FIG. 6 is a functional block diagram of the load reduction assistance device according to the present embodiment.

The load reduction assistance device 400 starts when the power is turned on, and executes an operation program stored in advance. Thereby, the load reduction assistance device 400 is provided with at least the function configuration of the acquisition unit 41, the status detection unit 42, the operation control unit 43, the storage unit 44, and the communication unit 45.

The acquisition unit 41 acquires user situation information of the user wearing the powered suit 100 from the user situation acquisition sensor 300 (FIG. 1). The user situation information includes location information of the user and biometric information of the user. The acquisition unit 41 further acquires the operational status of the powered suit 100. The operational status includes the sensing information detected by the shoe sole load sensor 18, the foot sole load sensor 19, the hip joint sensor 23, the knee joint sensor 24, and the ankle joint sensor 25, and the current operation mode.

The status detection unit 42 extracts the operation mode of the powered suit 100 in accordance with the operational status of the powered suit 100, the surrounding environment state based on the user's position information, and the physical fatigue state based on the user's biometric information. The surrounding environment state includes any of the weather, state of a passage, conditions about a destination, companions, or other user situations.

The operation control unit 43 notifies the control device 21 of the powered suit 100 of the extracted operation mode to operate the powered suit 100 in the operation mode. The operation control unit 43 notifies the control device 21 of reference information based on the surrounding environment state and the fatigue state together with the extracted operation mode.

The storage unit 44 stores various pieces of information. For example, the storage unit 44 stores biometric information such as the user's normal body temperature and heartbeat. In addition, the storage unit 44 stores information indicating familiarity with other users, information indicating the height of cooperation, and the like.

The communication unit 45 is communicatively connected with the powered suit 100, the user situation acquisition sensor 300, or the host system 500.

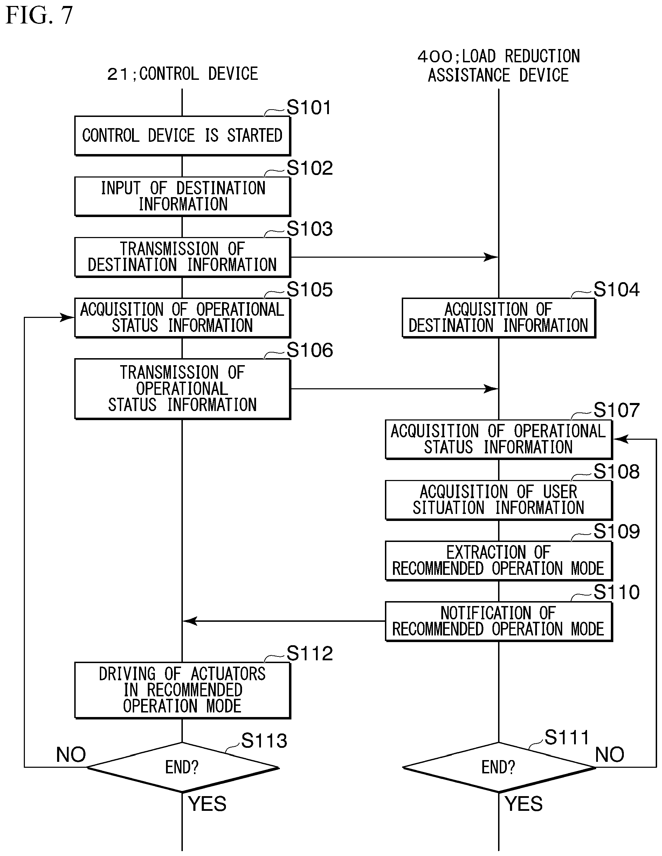

FIG. 7 is a diagram showing the processing flow of the load reduction assistance system according to the present embodiment. In the example of FIG. 7, the case where the load reduction assistance device 400 communicates with one control device 21 is illustrated, but the same applies to the case where the load reduction assistance device 400 communicates with a plurality of control devices 21.

First, the user puts on the powered suit 100. At this time, the user inserts the foot sole load sensor 19 inside the foot harness 17. As the area of the foot sole load sensor 19, a size suitable for the size of the user's foot may be used. The user attaches the shoe sole load sensor 18 to the ground contact surface side of the foot harness 17 or the shoe sole plate 16 of the powered suit 100. As the area of the shoe sole load sensor 18, a size suitable for the foot harness 17 corresponding to the size of the user's foot may be used.

The user operates the power button of the control device 21 provided in the powered suit 100 to turn on the power. Thereby, the control device 21 is started (Step S101).

The display control unit 215 of the control device 21 displays a destination input screen on the display unit 30 and accepts the input of the destination information (Step S102). On the destination input screen, the destination and the target arrival time can be input as the destination information. The target arrival time is the target time to arrive at the destination. The user inputs the destination information in the destination input screen. The display unit 30 outputs the input destination information to the control device 21.

The communication unit 213 of the control device 21 transmits the destination information to the load reduction assistance device 400 (Step S103). The acquisition unit 41 of the load reduction assistance device 400 receives and acquires the destination information transmitted from the control device 21 (Step S104). The acquisition unit 41 writes the received destination information to the storage unit 44.

The user walks while wearing the powered suit 100. The user may load luggage on the loading platform 20 of the powered suit 100 and walk. The drive control unit 211 of the control device 21 controls the hip actuator 13, the knee actuator 14, and the ankle actuator 15 so as to reduce the load on the user due to the weight of the luggage and the powered suit 100. Thereby, the powered suit 100 tracks various motions of the user.

While the control device 21 is being driven, the information acquisition unit 212 acquires the sensing information from the shoe sole load sensor 18, the foot sole load sensor 19, the hip joint sensor 23, the knee joint sensor 24, and the ankle joint sensor 25 at predetermined intervals as operational status information (Step S105). The predetermined interval is, for example, every short time such as every 10 milliseconds. The information acquisition unit 212 records the operational status information acquired at predetermined intervals in the storage unit 214 in an associated manner. The communication unit 213 adds the current operation mode to the operational status information recorded in the storage unit 214 via the wireless communication device 105, and transmits the information to the load reduction assistance device 400 (Step S106).

The acquisition unit 41 of the load reduction assistance device 400 receives and acquires the operational status information transmitted from the control device 21 (Step S107). The acquisition unit 41 receives and acquires the user situation information from the user situation acquisition sensor 300 (Step S108).

The status detection unit 42 extracts the recommended operation mode of the powered suit 100 according to the operational status information and user situation information that have been acquired (Step S109). For example, first, the status detection unit 42 analyzes the current behavior of the user on the basis of the operational status information. The behavior includes, for example, "running", "walking", "stopping", and the like. Subsequently, the status detection unit 42 determines the fatigue state of the user's body based on the biometric information included in the user situation information. For example, the status detection unit 42 compares the normal body temperature and heartbeat of the user with the biometric information acquired by reading from the storage unit 44, and determines the fatigue state based on the difference. The status detection unit 42 determines the surrounding environment state on the basis of the position information included in the user situation information. Specifically, the status detection unit 42 acquires the surrounding environment state such as the weather at the user's current position, the state of the passage, the status of the destination, companions of the user, or the status of other users.

The state of the passage includes whether the passage is flat, whether the passage is uphill or downhill in the direction of travel, whether the passage is a paved road, and the like. The status of the destination includes the distance from the current position to the destination, the estimated time of arrival at the destination, the weather at the destination, and the like. The estimated time of arrival is the time of arrival at the destination. Companions of the user includes information about companions accompanying the user. The status of other users includes location information of other users. The status detection unit 42 determines the cooperation state with a companion according to the companion of the user. The cooperation state is high if the companion is a person close to the user, and the cooperation state is low if the companion is not

Then, the status detection unit 42 extracts the recommended operation mode based on the current user behavior, the current operation mode, the fatigue state, and the surrounding environment state. For example, when the current user behavior is "walking", the operation mode is "running", and the fatigue state is "high", the status detection unit 42 extracts "walking" as the recommended operation mode. When the current user behavior is "walking" and the state of the passage is "uphill", the status detection unit 42 extracts "uphill walking", in which the assist force is stronger than normal "walking", as the recommended operation mode. Assist force is a force for reducing the load, and specifically is the magnitude of the torque output by the hip actuator 13, the knee actuator 14, and the ankle actuator 15. When the cooperation state with a companion is high, the status detection unit 42 extracts "cooperative walking", in which the assist force is weaker than normal "walking", as the recommended operation mode.

The operation control unit 43 notifies the control device 21 of the recommended operation mode extracted by the status detection unit 42 (Step S 110). At this time, the operation control unit 43 may notify the control device 21 of other reference information together with the recommended operation mode. The operation control unit 43 determines whether or not to end the process (Step S111). When the process is not ended, the load reduction assistance device 400 performs control to repeat the process from Step S107. Thereby, the load reduction assistance device 400 repeats the process of extracting the recommended operation mode based on the operational status information and the user situation information and notifying the powered suit 100.

The drive control unit 211 of the control device 21 drives the hip actuator 13, the knee actuator 14, and the ankle actuator 15 in the recommended operation mode notified from the load reduction assistance device 400 (Step S112). The recommended operation mode may be one that indicates a control parameter such as a correction coefficient that corrects each torque value, calculated by the drive control unit 211 and output to the hip actuator 13, the knee actuator 14, and the ankle actuator 15. The drive control unit 211 multiplies the correction coefficient corresponding to the recommended operation mode by the value of each torque calculated by a predetermined torque calculation formula and output to the hip actuator 13, the knee actuator 14, and the ankle actuator 15. The drive control unit 211 outputs the torque value obtained as a result to the hip actuator 13, the knee actuator 14, and the ankle actuator 15.

Specifically, the drive control unit 211 acquires a control parameter of the control pattern corresponding to the recommended operation mode from the storage unit or the like. Then, using the sensing information indicating the current value and the angle reference of each joint, the drive control unit 211 calculates the target value of torque before correction output by the hip actuator 13, the knee actuator 14, and the ankle actuator 15 based on the control parameter and algorithm corresponding to the determined motion. The drive control unit 211 uses the sensing information indicating the current value acquired from at least one of the shoe sole load sensor 18, the foot sole load sensor 19, the hip joint sensor 23, the knee joint sensor 24, the ankle joint sensor 25, or the acceleration sensor 26.

The drive control unit 211 controls the rotation angles of the hip actuator 13, the knee actuator 14, and the ankle actuator 15 with the angle controller $K_{ci}(s)$ on the basis of the target value of the torque. "s" indicates the frequency domain of the control system. Subsequently, the drive control unit 211 causes the hip actuator 13, the knee actuator 14, and the ankle actuator 15 of each leg to output the torque $\tau$ with a force controller $K_{bi}(s)$.

Thereby, the interaction force $F_k$ between suits and person applied by the user, the applied torque $l_k$ applied by the user, and the output torque $\tau$ in the kth of the time series (current value) become the dynamics P(s) of each actuator. The hip joint sensor 23, the knee joint sensor 24, and the ankle joint sensor 25 detect each joint angle $\theta_k$ at the kth of the time series according to the dynamics G(s) of the powered suit 100 based on the dynamics P(s) of the hip actuator 13, the knee actuator 14, and the ankle actuator 15. Then, the control device 21 repeats the above-described processing.

Note that the drive control unit 211 calculates the torque $\tau$ using the following torque calculation formula as an example. In this torque calculation formula (1), "$(\theta) / G(s)$" indicates a feedback factor to the drive control unit 211. "$F_k \cdot l_k$" indicates a feedforward factor. $T_i$ indicates the target value of the torque prior to correction. f($\theta$) indicates a function including an angle $\theta$ based on the angle reference of the hip actuator 13, the knee actuator 14, and the ankle actuator 15. The torque calculation formula below is an example, and a formula other than the torque calculation formula shown below may be used. In the torque calculation formula (1), "s" indicates the frequency domain of the control system, $K_{bi}$ indicates the control model of the force controller, and $K_{ci}$ indicates the control model of the angle controller.

$$\tau = K_{bi}(s) \{T_i \cdot K_{ci}(s) - f(\theta) / G(s) + F_k \cdot l_k\} \qquad (1)$$

The display control unit 215 may display reference information on the display unit 30 when the reference information is added to the recommended operation mode. The drive control unit 211 determines whether or not to end the process (Step S113). When the control device 21 does not end the process, the control device 21 performs control to repeat the process from Step S105. As a result, the control device 21 repeats the process of transmitting the operational status information to the load reduction assistance device 400.

According to the above processing, the status detection unit 42 of the load reduction assistance device 400 extracts the recommended operation mode of the powered suit 100 based on the user situation information and the operational status information, and the operation control unit 43 notifies the recommended operation mode. As a result, the load reduction assistance device 400 operates the powered suit 100 in the recommended operation mode. Therefore, it is possible to set the operation mode of the powered suit 100 to the optimum state by utilizing various pieces of information such as the user's fatigue state, the operational status of the powered suit 100, the surrounding environment state, and the cooperation state with a companion. Therefore, it is possible to provide load reduction and fatigue reduction more suited to the user.

In addition, by the above processing, when acting in a team with many companions, the optimum recommended operation mode as a team may be extracted based on user situation information such as the fatigue state of each user belonging to the team, and torque control using the recommended operation mode may be performed. As a result, it is possible to perform more efficient load reduction as compared with the case of acting alone or carrying luggage without using the powered suit 100.

(Second Embodiment)

Next a second embodiment will be described.

Since the configuration of the load reduction assistance system S1 of the present embodiment is the same as that of the first embodiment, the description thereof will be omitted. In the first embodiment, the load reduction assistance device 400 extracts only one recommended operation mode and notifies the control device 21. The second embodiment differs from the first embodiment on the point of the load reduction assistance device 400 extracting a plurality of recommended operation modes and notifying the control device 21, and the control device 21 allowing the user to select one from the plurality of recommended operation modes.

That is, the status detection unit 42 of the load reduction assistance device 400 extracts multiple operation modes of the powered suit 100 in accordance with the operational status of the powered suit 100, the surrounding environment state based on the user's position information, and the fatigue state based on the user's biometric information.

The operation control unit 43 notifies the control device 21 of the powered suit 100 of the extracted plurality of operation modes.

The display control unit 215 of the control device 21 displays the notified plurality of operation modes on the display unit 30 so that the user can make a selection.

The drive control unit 211 drives the hip actuator 13, the knee actuator 14, and the ankle actuator 15 in the operation mode selected by the user on the display unit 30, to reduce the load on the user.

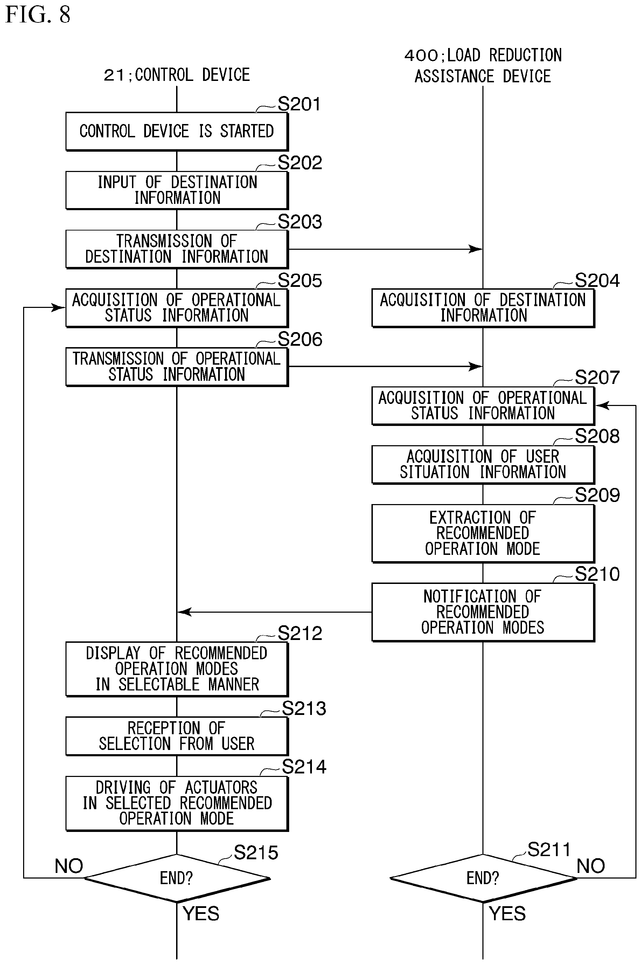

FIG. 8 is a diagram showing the processing flow of the load reduction assistance system according to the present embodiment. In the example of FIG. 8, the case where the load reduction assistance device 400 communicates with one control device 21 is illustrated, but the same applies to the case where the load reduction assistance device 400 communicates with a plurality of control devices 21.

Since the processes from Step S201 to Step S208 are the same as the processes from Step S102 to Step S108 described above, the descriptions thereof will be omitted.

Following Step S208, the status detection unit 42 extracts a plurality of recommended operation modes of the powered suit 100 according to the acquired operational status information and user situation information (Step S209).

For example, the status detection unit 42 extracts a predetermined number of recommended operation modes in descending order of priority.

The operation control unit 43 notifies the control device 21 of the plurality of recommended operation modes extracted by the status detection unit 42 together with their priorities (Step S210). At this time, the operation control unit 43 may notify the control device 21 of other reference information together with the recommended operation modes. The operation control unit 43 determines whether or not to end the process (Step S211). When the load reduction assistance device 400 does not end the process, the load reduction assistance device 400 performs control to repeat the process from Step S207. As a result, the load reduction assistance device 400 repeats the process of extracting recommended operation modes based on the operational status information and the user situation information and notifying the powered suit 100.

The display control unit 215 of the control device 21 displays the plurality of recommended operation modes notified from the load reduction assistance device 400 on the display unit 30 to be selectable by the user (Step S212). At this time, if reference information has been added to the recommended operation modes, the display control unit 215 may display the reference information on the display unit 30.

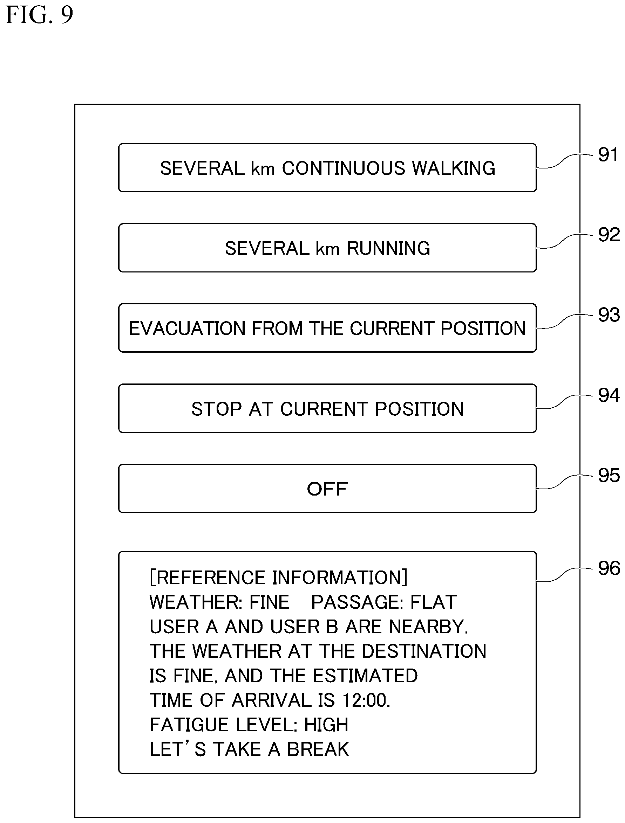

FIG. 9 is an image diagram showing an example of the operation mode selection screen according to the present embodiment.

In the example shown in this figure, the display control unit 215 selectably displays in the selection screen the recommended operation modes "Several km continuous walking" 91, "Several km running" 92, "Evacuation from the current position" 93, "Stop at current position" 94, and "OFF" 95 in descending order of priority from the top. The operation mode "OFF" is an operation mode that does not provide load reduction, that is, does not drive the hip actuator 13, the knee actuator 14, and the ankle actuator 15.

The display control unit 215 further displays the reference information 96 on the selection screen. In this example, the display control unit 215 displays as reference information in the selection screen: "Weather: fine", the weather at the current position, "Passage: flat", the state of the passage, and "User A and user B are nearby.", giving notice of other users in the vicinity. The display control unit 215 also displays as reference information in the selection screen: "The weather at the destination is fine and the estimated time of arrival is 12:00.", which provides the weather at the destination and the estimated time of arrival, and "Fatigue level: High -- Let's take a break", which gives notice of the user's fatigue state.

Note that the display control unit 215 may display a map when giving notice of other users in the vicinity, and may indicate the positions of the other users on the map. The display control unit 215 may display on the map a recommended position indicating the position where the user currently should be with respect to the destination together with the current position of the user.

Returning to FIG. 8, the user selects one from the plurality of recommended operation modes displayed on the display unit 30. The display unit 30 receives the selection input of the recommended operation mode (Step S213), and outputs the selected recommended operation mode to the control device 21. The drive control unit 211 of the control device 21 drives the hip actuator 13, the knee actuator 14, and the ankle actuator 15 in the recommended operation mode selected by the user (Step S214). The drive control unit 211 determines whether or not to end the process (Step S215). When the control device 21 does not end the process, the control device 21 performs control to repeat the process from Step S205. Thereby, the control device 21 repeats the process of transmitting the operational status information to the load reduction assistance device 400.

According to the above processing, the status detection unit 42 of the load reduction assistance device 400 extracts a plurality of recommended operation modes of the powered suit 100 on the basis of the user situation information and the operational status information, and the operation control unit 43 gives notice of the plurality of recommended operation modes. Then, the display control unit 215 of the powered suit 100 displays to the user in a selectable manner the plurality of recommended operation modes about which notice has been given. The drive control unit 211 drives the hip actuator 13, the knee actuator 14, and the ankle actuator 15 in the recommended operation mode selected by the user. Thereby, in addition to the effect in the first embodiment, it is possible to provide optimum load reduction and fatigue reduction that reflect the intention of the user.

In the first embodiment and the second embodiment described above, the load reduction assistance device 400 may also specify the recommended operation mode using an integrated judgment function by means of machine learning when specifying a recommended operation mode on the basis of the operational status information and the user situation information of a plurality of users belonging to a team.

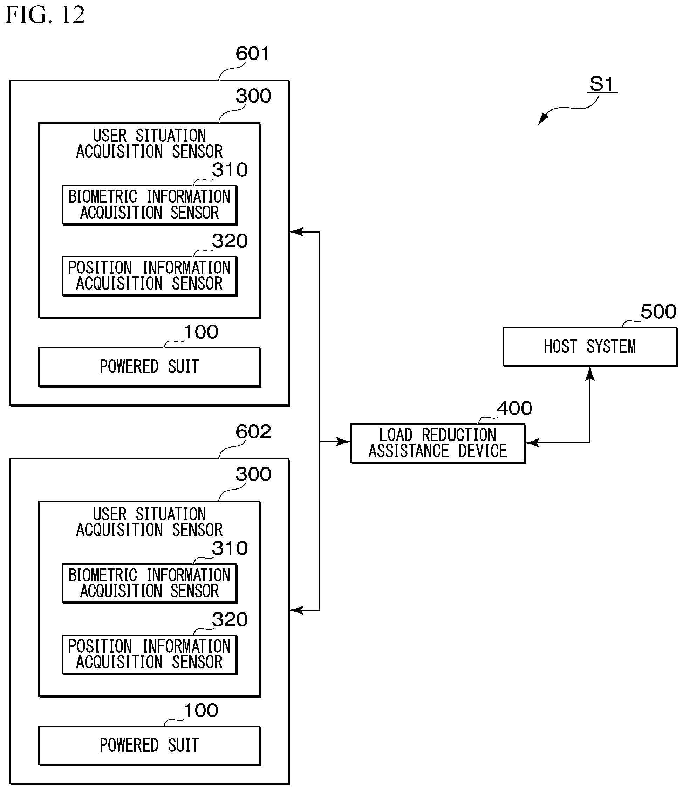

FIG. 12 is a diagram showing a configuration of a load reduction assistance system having a plurality of user situation acquisition sensors 300 and powered suits 100. The load reduction assistance system S1 shown in FIG. 12 is provided with a plurality of load reduction units 601 and 602 each including the user situation acquisition sensor 300 and the powered suit 100.

The load reduction assistance device 400 acquires state information including the user's position information from each of the plurality of user situation acquisition sensors 300. The state information may include, for example, the fatigue state and an surrounding environment state. The load reduction assistance device 400 extracts a reference model in accordance with machine learning using the acquired state information about a plurality of users. That is, the load reduction assistance device 400 extracts the recommended operation mode of each of the plurality of powered suits 100 according to machine learning. The load reduction assistance device 400 operates each powered suit 100 according to the extracted recommended operation mode.

For example, the load reduction assistance device 400 specifies an ideal movement pattern of a team to which a plurality of users using the powered suit 100 belong, and a reference model based on the behavior pattern. The load reduction assistance device 400 machine-learns various sensing data (fatigue state, surrounding environment state, and the like) that can be repeatedly acquired for the current plurality of users, and extracts a reference model including the recommended operation pattern of the plurality of users. That is, the load reduction assistance device 400 specifies a reference model that realizes optimal cooperative behavior by the plurality of users based on the fatigue state and the surrounding environment state of the plurality of users.

The plurality of recommended operation patterns of the reference model may be the same among a plurality of users or may be different from each other. When the recommended operation patterns differ from each other among the plurality of users, the recommended operation pattern of each user is specified according to, for example, sensing data.

The load reduction assistance device 400 compares the specified reference model with the current operation pattern extracted from the sensing data of each user and extracts the difference. For a plurality of users, the load reduction assistance device 400 determines the operation of the users based on the difference.

The drive control unit 211 controls the output torque for the plurality of users with a control pattern according to the operation determined by the load reduction assistance device 400. That is, the control device 21 acquires the control parameters of the control pattern of each user corresponding to the specified reference model from a plurality of reference models stored in advance in the storage unit or the like.

Then, the drive control unit 211 sets the optimum control parameters for the plurality of users according to the difference between the determined current operation pattern and the reference model. The drive control unit 211, using the sensing information indicating the current value and the angle reference of each joint, calculates the target value of the torque output by hip actuator 13, the knee actuator 14, and the ankle actuator 15 based on the control parameters and algorithms corresponding to the determined operation. The drive control unit 211 uses sensing information indicating the current value acquired from at least one of the shoe sole load sensor 18, the foot sole load sensor 19, the hip joint sensor 23, the knee joint sensor 24, the ankle joint sensor 25, or the acceleration sensor 26. The drive control unit 211 outputs the torque $\tau$ at the current time calculated by the torque calculation formula using the target value of the torque to the calculated hip actuator 13, knee actuator 14, and ankle actuator 15 of each leg.

The team to which the above-mentioned plurality of users belong may be, for example, an administrative unit such as a fire brigade, a police unit, a mountain unit, a nuclear accident-related unit, or a coastal sea area rescue unit.

When the powered suit 100 is used by a fire brigade, for example, in a large-scale fire extinguishing activity, the load reduction assistance device 400, as ascertainment of the surrounding situation, identifies the place where the fire is severe and the place where it is difficult to secure a water discharge route. Then, the load reduction assistance device 400 can perform appropriately coordinated load reduction processing by the recommended operation mode according to the arrangement of the firefighters, serving as a plurality of users belonging to the fire brigade.

When used by a police unit, for example, the powered suit 100 can identify the road congestion status and route condition for tracking a perpetrator, and can perform appropriate load reduction processing by the recommended operation mode according to the police unit member serving as a user belonging to the police unit. As a result, the police officers as a plurality of users can cooperate with each other according to their respective recommended operation modes and efficiently perform the action of pursuing the perpetrator.

When used by a mountain unit, for example, the powered suit 100 can specify the surrounding conditions such as the gradient of the slope and the width of the search range in the mountain rescue work and the optimum route, and can perform appropriate load reduction processing by the recommended operation mode according to the mountain member. As a result, the mountain members as a plurality of users can cooperate with each other according to their respective recommended operation modes and perform efficient rescue activities.

When used in an accident work unit, for example, the powered suit 100 can for example perform specification of the work environment in the work of the work unit member, specify the surrounding damage situation, and perform appropriate load reduction processing by the recommended operation mode according to the work unit member. As a result, the workers as a plurality of users can cooperate with each other according to their respective recommended operation modes and perform efficient accident response work.

When used by a coastal sea area rescue team, for example, the powered suit 100 specifies the conditions around the sea and underwater (presence of tetrapods, presence of soft terrain, presence of rough terrain, and the like) in the rescue work of team members. Then, the powered suit 100 can perform appropriate load reduction processing by the recommended operation mode according to the team members. As a result, the members as a plurality of users can cooperate with each other according to their respective recommended operation modes and perform efficient rescue work.

Although one embodiment of the present invention has been described above, the present invention is not limited to the above-described embodiment, and various modifications can be made within a scope not departing from the scope of the present invention as defined in the appended claims.

For example, the shoe sole load sensor 18 may be provided in advance on a side of the ground contact surface of the shoe sole plate 16 of the powered suit 100. Also, the foot sole load sensor 19 may be inserted in advance inside the foot harness 17.

In the above description, it was shown that the shoe sole load sensor 18 has an area covering the entire underside of the foot harness 17, and the foot sole load sensor 19 has an area covering the entire underside of the foot in the foot harness 17. However, the shoe sole load sensor 18 may be capable of measuring the load applied to the ground contact surface from the shoe sole plate 16 or the foot harness 17 even when the position where the load is applied deviates.

In the above description, the case of controlling the powered suit 100 was illustrated, but the control device 21 is not limited thereto, and can be applied to general control of a multi-joint robot or the like (for example, a humanoid robot) having a non-linear mode transition.

In the above description, the powered suit 100 is provided with the hip actuator 13, the knee actuator 14, and the ankle actuator 15 corresponding respectively to each joint, but is not limited thereto. The powered suit 100 may have at least one of the hip actuator 13, the knee actuator 14, and the ankle actuator 15. For example, the powered suit 100 may be provided with at least the hip actuator 13 and the knee actuator 14, and does not have to be provided with the ankle actuator 15. Alternatively, the ankle actuator 15 may be an actuator that does not use a control signal, such as a mechanical leaf spring.

In the above description, the powered suit 100 is provided with both the shoe sole load sensor 18 and the foot sole load sensor 19, but is not limited thereto, and either one of the shoe sole load sensor 18 and the foot sole load sensor 19 may be provided.

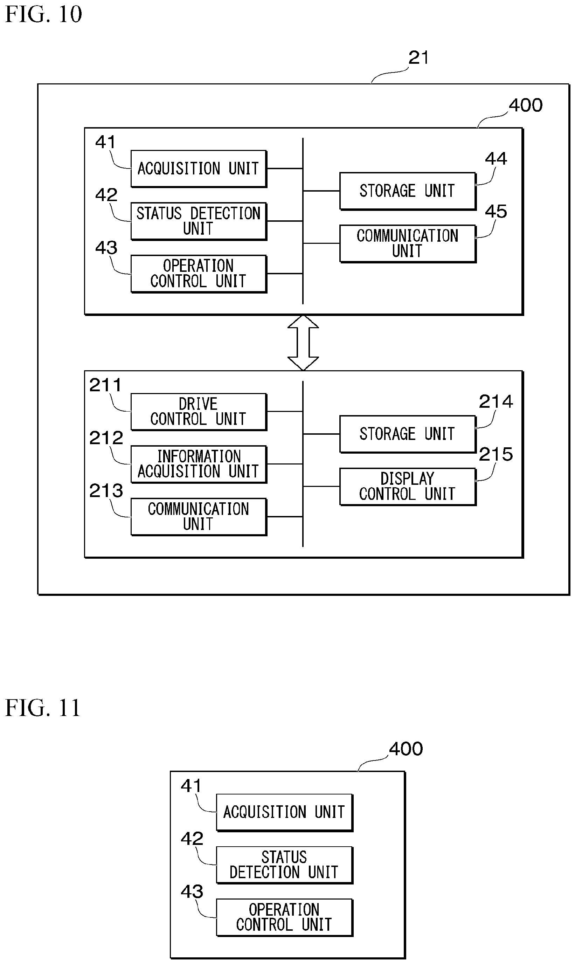

FIG. 10 is a diagram showing another example of the control device.

In the above example, the case where the control device 21 and the load reduction assistance device 400 are connected by wireless communication was used for explanation. However, the load reduction assistance device 400 may be equipped inside the control device 21 and provided in the powered suit 100. By providing the load reduction assistance device 400 inside the control device 21, delay in data transmission/reception can be prevented. Therefore, it is possible to respond in real time without delay even to a sudden operation of the user.

FIG. 11 is a diagram showing the minimum configuration of the load reduction assistance device.

The load reduction assistance device may have at least the functions of the acquisition unit 41, the status detection unit 42, and the operation control unit 43.

The acquisition unit 41 acquires the user's location information.

The status detection unit 42 extracts the operation mode of the powered suit 100 according to the surrounding environment state based on the user's position information.

The operation control unit 43 causes the powered suit 100 to operate in the extracted operation mode.

Each device mentioned above may also be a computer provided with hardware such as the CPU (Central Processing Unit) 101, the ROM (Read Only Memory) 102, the RAM (Random Access Memory) 103, an HDD (Hard Disk Drive) 104, and the wireless communication device 105.

Each device described above has a computer system inside. The process of each processing described above is stored in a computer-readable recording medium in the form of a program, with the process being performed by the computer reading and executing this program. Here, the computer-readable recording medium refers to a magnetic disk, a magneto-optical disk, a CD-ROM, a DVD-ROM, a semiconductor memory, or the like. This computer program may be distributed to a computer via a communication line, and the computer receiving the distribution may execute the program.

Further, the above-mentioned program may be for realizing some of the functions described above.

Moreover, the above-mentioned program may be a so-called differential file (differential program) that can realize the above-mentioned functions in combination with a program already recorded in the computer system.

INDUSTRIAL APPLICABILITY

According to the present invention, it is possible to provide more suitable load reduction control corresponding to the situation of a user.

[Reference Signs List]

S1: Load reduction assistance system
100: Powered suit
11: Skeleton portion
12: Belt
13: Hip actuator
14: Knee actuator
15: Ankle actuator
16: Shoe sole plate
17: Foot harness
18: Shoe sole load sensor
19: Foot sole load sensor
20: Loading platform
21: Control device
22: Battery
23: Hip joint sensor
24: Knee joint sensor
25: Ankle joint sensor
30: Display unit
211: Drive control unit
212: Information acquisition unit
213: Communication unit
214: Storage unit
215: Display control unit
300: User situation acquisition sensor
310: Biometric information acquisition sensor

320: Position information acquisition sensor
400: Load reduction assistance device
41: Acquisition unit
42: Status detection unit
43: Operation control unit
44: Storage unit
45: Communication unit
500: Host system

**Claims**

1. A load reduction assistance device (400) comprising:

   an acquisition means (41) for acquiring position information and biometric information of a user wearing a load reduction device that reduces a load on the user;
   a status detection means (42) for extracting an operation mode of the load reduction device corresponding to a surrounding environment state based on the position information of the user; and
   an operation control means (43) for causing the load reduction device to operate in the extracted operation mode, **characterized in that** the surrounding environment state includes information about a companion accompanying the user, and **in that**
   the status detection means (42) determines whether a cooperation state with the companion is high or not, and extracts the operation mode based on a current user behavior, a current operation mode, a fatigue state based on the biometric information, and a result of the determining of the cooperation state with the companion.

2. The load reduction assistance device (400) according to claim 1, wherein

   the acquisition means (41) further acquires an operational status of the load reduction device, and
   the status detection means (42) extracts the operation mode on the basis of the operational status of the load reduction device.

3. The load reduction assistance device (400) according to claim 1 or 2, wherein

   the status detection means (42) extracts a plurality of operation modes, and
   the operation control means (43), by giving notice of the plurality of operation modes, causes the load reduction device to display the plurality of operation modes in a manner selectable by the user.

4. The load reduction assistance device (400) according to any one of claims 1 to 3, wherein the operation control means (43) notifies the load reduction device of reference information based on the surrounding environment state along with the operation mode.

5. The load reduction assistance device (400) according to any one of claims 1 to 3, wherein the operation control means (43) causes the load reduction device to display reference information by notifying the load reduction device of the reference information based on the surrounding environment state along with the operation mode.

6. The load reduction assistance device (400) according to any one of claims 1 to 5, wherein the surrounding environment state includes any one of weather, a state of a passage, companions, or other user situations.

7. A load reduction assistance system comprising:

   the load reduction assistance device (400) according to claim 1; and
   a load reduction device that reduces the load on the user.

8. The load reduction assistance system according to claim 7, wherein

   the acquisition means (41) further acquires an operational status of the load reduction device, and
   the status detection means (42) extracts the operation mode on the basis of the operational status of the load reduction device.

9. The load reduction assistance system according to any one of claim 7 or claim 8, wherein

the status detection means (42) extracts a plurality of operation modes,
the operation control means (43) notifies the load reduction device of a plurality of operation modes, and
the load reduction device comprises

a display means (215) for displaying, in a manner selectable by the user, the plurality of operation modes about which notification has been received, and
a drive mechanism (211) configured to reduce the load on the user in the operation mode selected by the user.

10. The load reduction assistance system according to any one of claim 7 to claim 9, wherein

the operation control means (43) notifies the load reduction device of reference information based on the surrounding environment state along with the operation mode, and
the load reduction device further comprises a display means (215) for displaying the reference information about which notification has been received.

11. The load reduction assistance system according to any one of claim 7 to claim 10, comprising a plurality of load reduction devices, wherein

the acquisition means (41) acquires the position information of the user from the plurality of load reduction devices;
the status detection means (42) extracts the operation mode of each of the plurality of load reduction devices; and
the operation control means (43) causes the plurality of load reduction devices to operate in the extracted operation modes, respectively.

12. A load reduction assistance method comprising:

acquiring position information and biometric information of a user wearing a load reduction device that reduces a load on the user;
extracting an operation mode of the load reduction device corresponding to a surrounding environment state based on the position information of the user; and
causing the load reduction device to operate in the extracted operation mode,
**characterized in that**
the surrounding environment state includes information about a companion accompanying the user,
and **in that** the extracting includes determining whether a cooperation state with the companion is high or not, and extracting the operation mode based on a current user behavior, a current operation mode, a fatigue state based on the biometric information, and a result of the determining of the cooperation state with the companion.

13. A program that causes a computer of a load reduction assistance device (400) to execute processes, the processes comprising:

acquiring position information and biometric information of a user wearing a load reduction device that reduces a load on the user;
extracting an operation mode of the load reduction device corresponding to a surrounding environment state based on the position information of the user; and
causing the load reduction device to operate in the extracted operation mode,
**characterized in that**
the surrounding environment state includes information about a companion accompanying the user,
and **in that** the extracting includes determining whether a cooperation state with the companion is high or not, and extracting the operation mode based on a current user behavior, a current operation mode, a fatigue state based on the biometric information, and a result of the determining of the cooperation state with the companion.

**EP 3 881 984 B1**

**Patentansprüche**

1. Lastreduzierungsunterstützungsvorrichtung (400), die aufweist:

   eine Erfassungseinrichtung (41) zum Erfassen von Positionsinformationen und biometrischen Informationen eines Benutzers, der eine Lastreduzierungsvorrichtung trägt, die eine Last auf den Benutzer reduziert;
   eine Zustandserfassungseinrichtung (42) zum Extrahieren eines Betriebsmodus der Lastreduzierungsvorrichtung, der einem Umgebungszustand entspricht, basierend auf den Positionsinformationen des Benutzers; und
   eine Betriebssteuereinrichtung (43), um die Lastreduzierungsvorrichtung zu veranlassen, im extrahierten Betriebsmodus zu arbeiten,
   **dadurch gekennzeichnet, dass**
   der Umgebungszustand Informationen über eine Begleitperson enthält, die den Benutzer begleitet,
   und dass
   die Zustandserfassungseinrichtung (42) bestimmt, ob ein Kooperationszustand mit der Begleitperson hoch ist oder nicht, und den Betriebsmodus basierend auf einem aktuellen Benutzerverhalten, einem aktuellen Betriebsmodus, einem Ermüdungszustand basierend auf den biometrischen Informationen und einem Ergebnis der Bestimmung des Kooperationszustandes mit der Begleitperson extrahiert.

2. Lastreduzierungsunterstützungsvorrichtung (400) nach Anspruch 1, wobei

   die Erfassungseinrichtung (41) ferner einen Betriebszustand der Lastreduzierungsvorrichtung erfasst, und
   die Zustandserfassungseinrichtung (42) den Betriebsmodus auf der Grundlage des Betriebszustands der Lastreduzierungsvorrichtung extrahiert.

3. Lastreduzierungsunterstützungsvorrichtung (400) nach Anspruch 1 oder 2, wobei

   die Zustandserfassungseinrichtung (42) mehrere Betriebsmodi extrahiert, und
   die Betriebssteuereinrichtung (43) durch Melden der mehreren Betriebsmodi die Lastreduzierungsvorrichtung veranlasst, die mehreren Betriebsmodi in einer vom Benutzer auswählbaren Weise anzuzeigen.

4. Lastreduzierungsunterstützungsvorrichtung (400) nach einem der Ansprüche 1 bis 3, wobei die Betriebssteuereinrichtung (43) der Lastreduzierungsvorrichtung Referenzinformationen basierend auf dem Umgebungszustand zusammen mit dem Betriebsmodus mitteilt.

5. Lastreduzierungsunterstützungsvorrichtung (400) nach einem der Ansprüche 1 bis 3, wobei die Betriebssteuereinrichtung (43) die Lastreduzierungsvorrichtung veranlasst, Referenzinformationen anzuzeigen, indem sie der Lastreduzierungsvorrichtung die Referenzinformationen basierend auf dem Umgebungszustand zusammen mit dem Betriebsmodus mitteilt.

6. Lastreduzierungsunterstützungsvorrichtung (400) nach einem der Ansprüche 1 bis 5, wobei der Umgebungszustand Wetter, Zustand eines Durchgangs, Begleitpersonen oder andere Benutzersituationen aufweist.

7. Lastreduzierungsunterstützungssystem, das aufweist:

   die Lastreduzierungsunterstützungsvorrichtung (400) nach Anspruch 1; und
   eine Lastreduzierungsvorrichtung, die die Last auf den Benutzer reduziert.

8. Lastreduzierungsunterstützungssystem nach Anspruch 7, wobei

   die Erfassungseinrichtung (41) ferner einen Betriebszustand der Lastreduzierungsvorrichtung erfasst, und
   die Zustandserfassungseinrichtung (42) den Betriebsmodus auf der Grundlage des Betriebszustands der Lastreduzierungsvorrichtung extrahiert.

9. Lastreduzierungsunterstützungssystem nach einem der Ansprüche 7 oder 8, wobei

   die Zustandserfassungseinrichtung (42) mehrere Betriebsmodi extrahiert,
   die Betriebssteuereinrichtung (43) der Lastreduzierungsvorrichtung die mehreren Betriebsmodi mitteilt, und
   die Lastreduzierungsvorrichtung aufweist:

eine Anzeigeeinrichtung (215) zum Anzeigen, in einer vom Benutzer auswählbaren Weise, der mehreren Betriebsarten, über die eine Benachrichtigung empfangen wurde, und

einen Antriebsmechanismus (211), der konfiguriert ist, die Last des Benutzers in dem vom Benutzer ausgewählten Betriebsmodus zu reduzieren.

10. Lastreduzierungsunterstützungssystem nach einem der Ansprüche 7 bis 9, wobei

die Betriebssteuereinrichtung (43) der Lastreduzierungsvorrichtung Referenzinformationen basierend auf dem Umgebungszustand zusammen mit dem Betriebsmodus mitteilt, und

die Lastreduzierungsvorrichtung ferner eine Anzeigeeinrichtung (215) zum Anzeigen der Referenzinformationen aufweist, über die eine Benachrichtigung empfangen wurde.

11. Lastreduzierungsunterstützungssystem nach einem der Ansprüche 7 bis 10, das mehrere Lastreduzierungsvorrichtungen aufweist, wobei

die Erfassungseinrichtung (41) die Positionsinformationen des Benutzers von den mehreren Lastreduzierungsvorrichtungen erfasst;

die Zustandserfassungseinrichtung (42) den Betriebsmodus jeder der mehreren Lastreduzierungsvorrichtungen extrahiert; und

die Betriebssteuereinrichtung (43) die mehreren Lastreduzierungsvorrichtungen veranlasst, jeweils in den extrahierten Betriebsmodi zu arbeiten.

12. Lastreduzierungsunterstützungsverfahren, das aufweist:

Erfassen von Positionsinformationen und biometrischen Informationen eines Benutzers, der eine Lastreduzierungsvorrichtung trägt, die eine Last auf den Benutzer reduziert;

Extrahieren eines Betriebsmodus der Lastreduzierungsvorrichtung, der einem Umgebungszustand entspricht, basierend auf den Positionsinformationen des Benutzers; und

Veranlassen der Lastreduzierungsvorrichtung im extrahierten Betriebsmodus zu arbeiten, **dadurch gekennzeichnet, dass**

der Umgebungszustand Informationen über eine Begleitperson enthält, die den Benutzer begleitet, und dass

das Extrahieren das Bestimmen, ob ein Kooperationszustand mit der Begleitperson hoch ist oder nicht, und das Extrahieren des Betriebsmodus basierend auf einem aktuellen Benutzerverhalten, einem aktuellen Betriebsmodus, einem Ermüdungszustand basierend auf den biometrischen Informationen und einem Ergebnis des Bestimmens des Kooperationszustands mit der Begleitperson aufweist.

13. Programm, das einen Computer einer Lastreduzierungsunterstützungsvorrichtung (400) veranlasst, Prozesse auszuführen, wobei die Prozesse aufweisen:

Erfassen von Positionsinformationen und biometrischen Informationen eines Benutzers, der eine Lastreduzierungsvorrichtung trägt, die eine Last auf den Benutzer reduziert;

Extrahieren eines Betriebsmodus der Lastreduzierungsvorrichtung, der einem Umgebungszustand entspricht, basierend auf den Positionsinformationen des Benutzers; und

Veranlassen der Lastreduzierungsvorrichtung im extrahierten Betriebsmodus zu arbeiten, **dadurch gekennzeichnet, dass**

der Umgebungszustand Informationen über eine Begleitperson enthält, die den Benutzer begleitet, und dass

das Extrahieren das Bestimmen, ob ein Kooperationszustand mit der Begleitperson hoch ist oder nicht, und das Extrahieren des Betriebsmodus basierend auf einem aktuellen Benutzerverhalten, einem aktuellen Betriebsmodus, einem Ermüdungszustand basierend auf den biometrischen Informationen und einem Ergebnis des Bestimmens des Kooperationszustands mit der Begleitperson umfasst.

**Revendications**

1. Dispositif d'aide à la réduction de charge (400), comprenant :

une unité d'acquisition (41) pour acquérir des informations de position et des informations biométriques d'un utilisateur portant un dispositif de réduction de charge réduisant une charge sur l'utilisateur ;
une unité de détection d'état (42) pour extraire un mode de fonctionnement du dispositif de réduction de charge correspondant à un état d'environnement ambiant sur la base des informations de position de l'utilisateur ; et
une unité de commande de fonctionnement (43) pour activer le dispositif de réduction de charge dans le mode de fonctionnement extrait,
**caractérisé en ce que** l'état d'environnement ambiant comprend des informations sur un accompagnateur de l'utilisateur,
et **en ce que** l'unité de détection d'état (42) détermine si un état de coopération avec l'accompagnateur est élevé ou non, et extrait le mode de fonctionnement sur la base du comportement actuel de l'utilisateur, du mode de fonctionnement actuel, de l'état de fatigue sur la base des informations biométriques, et du résultat de la détermination de l'état de coopération avec l'accompagnateur.

2.  Dispositif d'aide à la réduction de charge (400) selon la revendication 1, où

    l'unité d'acquisition (41) acquiert en outre un état de fonctionnement du dispositif de réduction de charge, et
    l'unité de détection d'état (42) extrait le mode de fonctionnement sur la base de l'état de fonctionnement du dispositif de réduction de charge.

3.  Dispositif d'aide à la réduction de charge (400) selon la revendication 1 ou la revendication 2, où

    l'unité de détection d'état (42) extrait une pluralité de modes de fonctionnement, et
    l'unité de commande de fonctionnement (43), par notification de la pluralité de modes de fonctionnement, entraîne l'affichage par le dispositif de réduction de charge de la pluralité de modes de fonctionnement, de manière à permettre une sélection par l'utilisateur.

4.  Dispositif d'aide à la réduction de charge (400) selon l'une des revendications 1 à 3, où l'unité de commande de fonctionnement (43) notifie au dispositif de réduction de charge des informations de référence sur la base de l'état d'environnement ambiant avec le mode de fonctionnement.

5.  Dispositif d'aide à la réduction de charge (400) selon l'une des revendications 1 à 3, où l'unité de commande de fonctionnement (43) entraîne l'affichage par le dispositif de réduction de charge d'informations de référence par notification au dispositif de réduction de charge des informations de référence sur la base de l'état d'environnement ambiant et du mode de fonctionnement.

6.  Dispositif d'aide à la réduction de charge (400) selon l'une des revendications 1 à 5, où l'état d'environnement ambiant comprend la météo, l'état d'un passage, les accompagnateurs ou d'autres situations d'utilisateur.

7.  Système d'aide à la réduction de charge, comprenant :

    le dispositif d'aide à la réduction de charge (400) selon la revendication 1 ; et
    un dispositif de réduction de charge réduisant la charge sur l'utilisateur.

8.  Système d'aide à la réduction de charge selon la revendication 7, où

    l'unité d'acquisition (41) acquiert en outre un état de fonctionnement du dispositif de réduction de charge, et
    l'unité de détection d'état (42) extrait le mode de fonctionnement sur la base de l'état de fonctionnement du dispositif de réduction de charge.

9.  Système d'aide à la réduction de charge selon la revendication 7 ou la revendication 8, où

    l'unité de détection d'état (42) extrait une pluralité de modes de fonctionnement,
    l'unité de commande de fonctionnement (43) notifie une pluralité de modes de fonctionnement au dispositif de réduction de charge, et
    le dispositif de réduction de charge comprend
    une unité d'affichage (215) pour afficher, de manière à permettre une sélection par l'utilisateur, la pluralité de modes de fonctionnement pour lesquels une notification a été reçue, et
    un mécanisme d'entraînement (211) prévu pour réduire la charge sur l'utilisateur dans le mode de fonctionnement sélectionné par l'utilisateur.

10. Système d'aide à la réduction de charge selon l'une des revendications 7 à 9, où

l'unité de commande de fonctionnement (43) notifie au dispositif de réduction de charge des informations de référence sur la base de l'état d'environnement ambiant et du mode de fonctionnement, et
le dispositif de réduction de charge comprend en outre une unité d'affichage (215) pour afficher les informations de référence pour lesquelles une notification a été reçue.

11. Système d'aide à la réduction de charge selon l'une des revendications 7 à 10, comprenant une pluralité de dispositifs de réduction de charge, où

l'unité d'acquisition (41) acquiert les informations de position de l'utilisateur à partir de la pluralité de dispositifs de réduction de charge ;
l'unité de détection d'état (42) extrait le mode de fonctionnement de chacun des dispositifs de réduction de charge ; et
l'unité de commande de fonctionnement (43) active la pluralité de dispositifs de réduction de charge dans les modes de fonctionnement extraits respectifs.

12. Procédé d'aide à la réduction de charge, comprenant :

l'acquisition d'informations de position et d'informations biométriques d'un utilisateur portant un dispositif de réduction de charge réduisant la charge sur l'utilisateur ;
l'extraction d'un mode de fonctionnement du dispositif de réduction de charge correspondant à un état d'environnement ambiant sur la base des informations de position de l'utilisateur ; et
l'activation du dispositif de réduction de charge dans le mode de fonctionnement extrait, **caractérisé en ce que**
l'état d'environnement ambiant comprend des informations sur un accompagnateur de l'utilisateur,
et **en ce que** l'extraction comprend la détermination si un état de coopération avec l'accompagnateur est élevé ou non, et l'extraction du mode de fonctionnement sur la base du comportement actuel de l'utilisateur, du mode de fonctionnement actuel, de l'état de fatigue sur la base des informations biométriques, et du résultat de la détermination de l'état de coopération avec l'accompagnateur.

13. Programme, entraînant l'exécution de processus par un ordinateur d'un dispositif d'aide à la réduction de charge (400), lesdits processus comprenant :

l'acquisition d'informations de position et d'informations biométriques d'un utilisateur portant un dispositif de réduction de charge réduisant une charge sur l'utilisateur ;
l'extraction d'un mode de fonctionnement du dispositif de réduction de charge correspondant à un état d'environnement ambiant sur la base des informations de position de l'utilisateur ; et
l'activation du dispositif de réduction de charge dans le mode de fonctionnement extrait, **caractérisé en ce que**
l'état d'environnement ambiant comprend des informations sur un accompagnateur de l'utilisateur,
et **en ce que** l'extraction comprend la détermination si l'état de coopération avec l'accompagnateur est élevé ou non, et l'extraction du mode de fonctionnement sur la base du comportement actuel de l'utilisateur, du mode de fonctionnement actuel, de l'état de fatigue sur la base des informations biométriques, et du résultat de la détermination de l'état de coopération avec l'accompagnateur.

FIG. 1

# FIG. 2

FIG. 3

FIG. 4

FIG. 5

400

401 CPU

402 ROM

403 RAM

404 LARGE-CAPACITY STORAGE DEVICE

405 COMMUNICATION MODULE

FIG. 6

400

41 ACQUISITION UNIT

42 STATUS DETECTION UNIT

43 OPERATION CONTROL UNIT

44 STORAGE UNIT

45 COMMUNICATION UNIT

FIG. 7

21;CONTROL DEVICE

400;LOAD REDUCTION
ASSISTANCE DEVICE

S101
CONTROL DEVICE IS STARTED

S102
INPUT OF DESTINATION
INFORMATION

S103
TRANSMISSION OF
DESTINATION INFORMATION

S104
ACQUISITION OF
DESTINATION INFORMATION

S105
ACQUISITION OF OPERATIONAL
STATUS INFORMATION

S106
TRANSMISSION OF
OPERATIONAL
STATUS INFORMATION

S107
ACQUISITION OF OPERATIONAL
STATUS INFORMATION

S108
ACQUISITION OF USER
SITUATION INFORMATION

S109
EXTRACTION OF
RECOMMENDED OPERATION MODE

S110
NOTIFICATION OF
RECOMMENDED OPERATION MODE

S112
DRIVING OF ACTUATORS
IN RECOMMENDED
OPERATION MODE

S113
NO          END?
YES

S111
END?          NO
YES

FIG. 8

21;CONTROL DEVICE

400;LOAD REDUCTION
ASSISTANCE DEVICE

S201
CONTROL DEVICE IS STARTED

S202
INPUT OF DESTINATION
INFORMATION

S203
TRANSMISSION OF
DESTINATION INFORMATION

S205
ACQUISITION OF OPERATIONAL
STATUS INFORMATION

S204
ACQUISITION OF DESTINATION
INFORMATION

S206
TRANSMISSION OF OPERATIONAL
STATUS INFORMATION

S207
ACQUISITION OF OPERATIONAL
STATUS INFORMATION

S208
ACQUISITION OF USER
SITUATION INFORMATION

S209
EXTRACTION OF
RECOMMENDED
OPERATION MODE

S210
NOTIFICATION OF
RECOMMENDED
OPERATION MODES

S212
DISPLAY OF RECOMMENDED
OPERATION MODES
IN SELECTABLE MANNER

S213
RECEPTION OF
SELECTION FROM USER

S214
DRIVING OF ACTUATORS
IN SELECTED RECOMMENDED
OPERATION MODE

S215
NO    END?
YES

S211
END?    NO
YES

FIG. 9

| SEVERAL km CONTINUOUS WALKING | 91 |

| SEVERAL km RUNNING | 92 |

| EVACUATION FROM THE CURRENT POSITION | 93 |

| STOP AT CURRENT POSITION | 94 |

| OFF | 95 |

[REFERENCE INFORMATION]
WEATHER: FINE    PASSAGE: FLAT
USER A AND USER B ARE NEARBY.
THE WEATHER AT THE DESTINATION
IS FINE, AND THE ESTIMATED
TIME OF ARRIVAL IS 12:00.
FATIGUE LEVEL: HIGH
LET'S TAKE A BREAK

96

## FIG. 10

## FIG. 11

FIG. 12

601

300

USER SITUATION
ACQUISITION SENSOR

310

BIOMETRIC INFORMATION
ACQUISITION SENSOR

320

POSITION INFORMATION
ACQUISITION SENSOR

100

POWERED SUIT

602

300

USER SITUATION
ACQUISITION SENSOR

310

BIOMETRIC INFORMATION
ACQUISITION SENSOR

320

POSITION INFORMATION
ACQUISITION SENSOR

100

POWERED SUIT

S1

500

HOST SYSTEM

400

LOAD REDUCTION
ASSISTANCE DEVICE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005230099 A
- JP 2018047547 A
- EP 3173191 A2
- WO 2017105547 A1